**Europäisches Patentamt**

**European Patent Office**

**Office européen des brevets**

(19)

(11) Veröffentlichungsnummer : **0 303 888 B1**

(12) **EUROPÄISCHE PATENTSCHRIFT**

(45) Veröffentlichungstag der Patentschrift :
24.04.91 Patentblatt 91/17

(51) Int. Cl.⁵ : **B05C 5/00, B05C 17/00,
B65D 35/36**

(21) Anmeldenummer : **88112563.7**

(22) Anmeldetag : **02.08.88**

(54) Adapter zum dosierten Aufbringen von Wärmeleitpaste.

(30) Priorität : **10.08.87 DE 8710902 U**

(43) Veröffentlichungstag der Anmeldung :
**22.02.89 Patentblatt 89/08**

(45) Bekanntmachung des Hinweises auf die
Patenterteilung :
**24.04.91 Patentblatt 91/17**

(84) Benannte Vertragsstaaten :
**AT BE CH DE FR GB IT LI NL**

(56) Entgegenhaltungen :
**GB-A- 2 174 356
US-A- 3 088 470
US-A- 3 126 574
US-A- 4 231 494**

(73) Patentinhaber : **Siemens Aktiengesellschaft
Wittelsbacherplatz 2
W-8000 München 2 (DE)**

(72) Erfinder : **Müller, Georg
Schubert Strasse 4
W-8901 Langweid (DE)**

**Beschreibung**

Die Erfindung betrifft einen Adapter zum dosierten Auftragen von Beschichtungsmitteln auf Bauteile, Kühlkörper und dergleichen, wobei in einem nach unten dachförmig abgeschrägtem Metallkörper ein Hohlraum vorgesehen ist, von dem zur gemeinsamen Schnittlinie der Dachschrägen führende im Durchmesser kleinere Querbohrungen abgehen, und daß schräg zum Hohlraum, aber auf diesen auftreffend, eine Öffnung zum Anschluß einer mit Beschichtungsmittel gefüllten Kartusche vorgesehen ist.

Bisher wird die Wärmeleitpaste auf Kühlkörper, Bauteile, Isolierfolien und dergleichen bei der Fertigung von Flachbaugruppen per Hand mit Hilfe eines Pinsels aufgetragen. Dadurch ist eine gleichmäßige Verteilung der Kühlmasse nur in sehr weiten Grenzen möglich.

Aufgabe der vorliegenden Erfindung ist es, eine Vorrichtung zur gleichmäßigen Auftragung der Wärmeleitpaste zu schaffen.

Zur Lösung dieser Aufgabe wird der Adapter derart ausgebildet, daß über dem dachförmig ausgebildeten Teil ein quaderförmiger Körper angeordnet ist, der einen Hohlraum in Form einer Längsbohrung enthält, daß die Querbohrungen untereinander mit unterschiedlichen Durchmessern versehen sind, und daß als Beschichtungsmittel Wärmeleitpaste verwendet wird.

Durch diese Maßnahmen erhält man einen Adapter zum dosierten Auftragen von Wärmeleitpaste mit Hilfe eines Dosiergerätes, wodurch eine stets gleichmäßige Dicke der aufzutragenden Wärmeleitpastenschicht gewährleistet ist.

Anhand der Ausführungsbeispiele nach den FIG 1 bis 3 wird die Erfindung näher erläutert.

Es zeigen

FIG 1 eine Prinzipskizze mit Dosiergerät und Adapter,

FIG 2 die Seiten- und Vorderansicht eines ersten Ausführungsbeispiels eines Adapters und

FIG 3 die Rückansicht und einen Längsschnitt eines ersten Beispiels des Adapters.

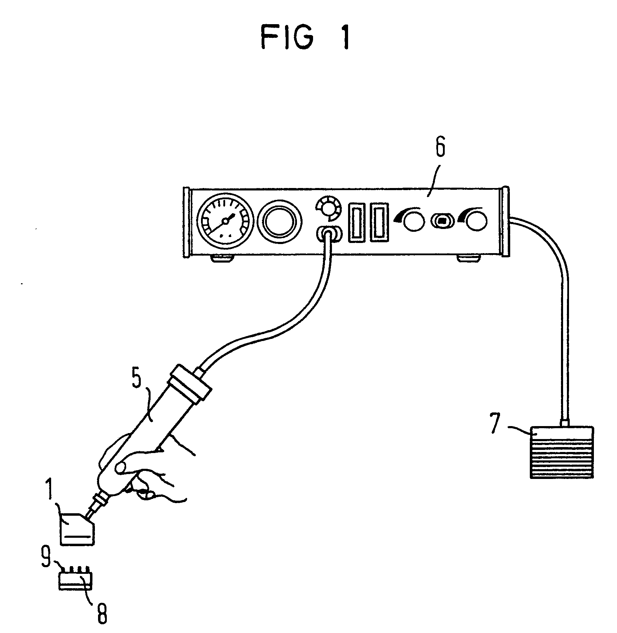

Das Auftragen der Wärmeleitpaste 9 erfolgt, wie in FIG 1 dargestellt, mit einem Dosiergerät 6, das mit einem unabhängig voneinander regelbarem Druck- und Zeitregler ausgerüstet ist. Die Ansteuerung des Druckreglers mit einem Ausgang und Anschluß für die Kartusche 5 erfolgt über einen externen pneumatischen Fußschalter 7.

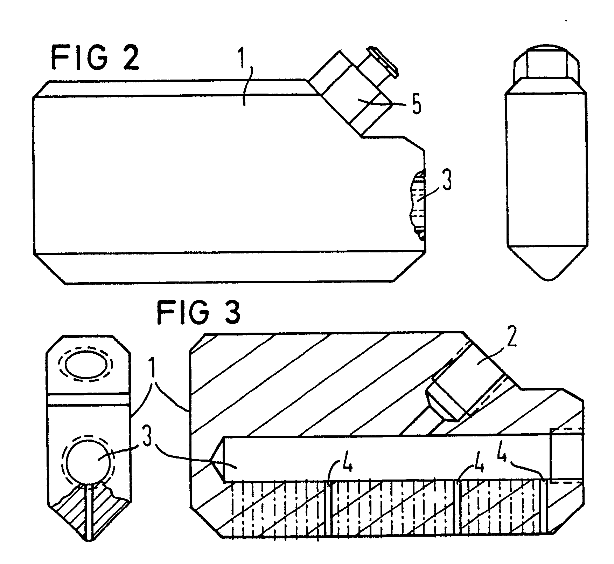

Der Adapter 1 nach FIG 2 besteht aus einem quaderförmigen, nach unten dachförmig verlaufenden Metallteil mit einer Längsbohrung 3 und einer Öffnung für den Einsatz der Kartusche 5 wobei ein Bajonettverschluß für die Befestigung zwischen Kartusche 5 und Adapter 1 vorgesehen ist.

Wie in FIG 3 dargestellt, verlaufen senkrecht von der Längsbohrung 2 weg in Richtung auf die Schnittkante der dachförmigen Abschrägungen zu Querbohrungen 4, die im dargestellten Beispiel im mittleren Teil des Adapters einen kleineren Durchmesser aufweisen, wie am Anfang und an dessen Ende.

**Ansprüche**

1. Adapter zum dosierten Auftragen von Beschichtungsmitteln auf Bauteile, Kühlkörper und dergleichen, wobei in einem nach unten dachförmig abgeschrägtem Metallkörper ein Hohlraum vorgesehen ist, von dem zur gemeinsamen Schnittlinie der Dachschrägen führende im Durchmesser kleinere Querbohrungen abgehen, und daß schräg zum Hohlraum, aber auf diesen auftreffend, eine Öffnung zum Anschluß einer mit Beschichtungsmittel gefüllten Kartusche vorgesehen ist, **dadurch gekennzeichnet,** daß über dem dachförmig ausgebildeten Teil ein quaderförmiger Körper angeordnet ist, der einen Hohlraum in Form einer Längsbohrung (3) enthält, daß die Querbohrungen (4) im mittlerem Teil des Adapters einen kleineren Durchmesser aufweisen, wie an dessen Anfang und dessen Ende und daß als Beschichtungsmittel Wärmeleitpaste verwendet wird.

**Claims**

1. Adapter for the dosed application of coating means on components, heat sinks and the like, a hollow space being provided in a metal body sloping away downwards in a roof-shaped manner, from which space transverse bores of a smaller diameter lead away to the common line of intersection of the roof slopes, and an opening being provided obliquely with respect to the hollow space but meeting the latter, for the connection of a cartridge filled with coating medium, characterised in that above the part of roof-shaped design there is arranged a body in the form of a right parallelepiped, which contains a hollow space in the form of a longitudinal bore (3), in that the transverse bores (4) in the middle part of the adapter have a smaller diameter than at its beginning and at its end, and in that thermally conduction paste is used as coating medium.

**Revendications**

1. Adapteur pour l'application dosée d'agents de revêtement sur des composants, des dissipateurs de chaleur et analogues, dans lequel il est prévu, dans un corps métallique biseauté vers le bas en forme de toit, une cavité à partir de laquelle sont issus des perçages transversaux de diamètres plus petits, qui mènent à la ligne d'intersection commune des inclinaison ou pentes du toit et en ce qu'il est prévu, inclinée par rapport à la cavité, mais y aboutissant, une ouverture de raccordement d'une cartouche emplie de l'agent de revêtement, caractérisé en ce qu'au-dessus de la partie constituée sous forme de toit est prévu un corps de forme parallélépipédique, qui comporte une cavité ayant la forme d'un perçage longitudinal (3), en ce que les perçages transversaux (4) présentent, dans la partie médiane de l'adapteur, un diamètre plus petit qu'à son début et à sa fin, et en ce qu'une pâte thermoconductrice est utilisée comme agent de revêtement.

# FIG 1

FIG 2

FIG 3